# EUROPÄISCHE PATENTSCHRIFT

(11) **EP 0 658 832 B1**
(45) Veröffentlichungstag und Bekanntmachung des Hinweises auf die Patenterteilung: **26.04.2000**
(21) Anmeldenummer: 94119058.9
(22) Anmeldetag: 02.12.1994
(51) Int. Cl.: G05B 19/4063

(54) **Einrichtung zur Steuerung einer Werkzeugmaschine oder eines Roboters**
Means to control a machinetool or a robot
Dispositif pour commander une machine-outil ou un robot

(30) Priorität: 16.12.1993 DE 4343073
(43) Veröffentlichungstag der Anmeldung: 21.06.1995
(73) Patentinhaber: SIEMENS AKTIENGESELLSCHAFT, 80333 München (DE)
(72) Erfinder: Hauf, Ronald, Dipl.-Ing. (FH), D-91096 Möhrendorf (DE); Reimann, Jürgen-Andreas, Dipl.-Ing., D-91074 Herzogenaurach (DE)

(56) Entgegenhaltungen:
- EP-A- 0 102 219
- EP-A- 0 275 992
- EP-A- 0 373 222
- EP-A- 0 378 690
- EP-A- 0 465 710
- EP-A- 0 554 462
- EP-A- 0 583 487
- DE-A- 2 945 587
- DE-B- 1 189 627
- US-A- 4 205 308
- US-A- 4 514 814
- US-A- 4 524 313
- US-A- 5 117 368
- V.J. MAGGIOLI: "The Safety Matrix for Guidelining Industrial Computers" IEEE TRANSACTIONS ON INDUSTRY APPLICATIONS., Nr. 3, Mai 1989 - Juni 1989, NEW YORK US, Seiten 514-522, XP000039080
- M.R. SYKORA ET AL: "The Design and Application of Redundant Programmable Controllers" CONTROL ENGINEERING., Bd. 29, Nr. 8, Juli 1982, ST.PONTIAC US, Seiten 77-79, XP002057993

## Beschreibung

Die Erfindung bezieht sich auf eine Einrichtung zur Steuerung mindestens eines Antriebs einer Werkzeugmaschine oder eines Roboters, wobei am Antrieb zwei unterschiedliche Positionserfassungseinrichtungen angreifen und wobei die Steuerungseinrichtung zwei Prozessorsysteme aufweist, von denen das eine vorzugsweise die Verfahrprogrammbearbeitung und die Lageregelung übernimmt und das andere Drehzahl und Stromregelungsaufgaben wahrnimmt.

Eine Einrichtung dieser Art wird beispielsweise beim Zusammenspiel von numerischen Steuerungen vom Typ SINUMERIK und Antriebssteuerungen des Typs SIMODRIVE der Anmelderin realisiert. Die Gesamtanlage wirkt dann auf das zu steuernde technische Gerät, beispielsweise die Werkzeugmaschine oder den Roboter ein. Fur Melde- und Überwachungszwecke sind am jeweiligen Gerät periphere Schaltorgane vorhanden. Beispielsweise sind Endlagenschalter vorgesehen, mit denen insbesondere der Positionierbereich von Werkzeugen überwacht werden kann. Dabei kann mit Hilfe der Endschalter ein zwangsweises Abschalten der jeweiligen Antriebe am Ende des jeweils durch die mechanischen Randbedingungen zulässigen Verfahrbereiches realisiert werden. Endlagenschalter sind dabei als sicherheitsrelevante Elemente aufwendig ausgebildet, und müssen über einen sicheren, gesonderten Signalpfad an die steuernde Einrichtung geschaltet werden.

Aufgabe der Erfindung ist es, eine Einrichtung der eingangs genannten Art so auszubilden, daß die mechanisch zulässigen Verfahrbereiche ohne den Einsatz von mechanischen Endschaltern überwachbar sind.

Gemäß der Erfindung wird diese Aufgabe dadurch gelöst, daß aus den Ausgangssignalen jeder der Positionserfassungseinrichtungen die jeweilige Antriebsposition gesondert bestimmt wird, daß in jedem der beiden Prozessorsysteme die Antriebspositionen unabhängig auf Gleichheit und das Einhalten eines vorgebbaren Positionsbereiches überwacht werden und daß bei detektierter Ungleichheit jeweils ein Störungssignal ausgelöst wird.

Die Erfindung geht dabei von der Erkenntnis aus, daß regelkreisnahe Funktionen bei Einrichtungen der eingangs genannten Art redundant vorliegen. Es wird nun die Tatsache ausgenutzt, daß am Positionieren einer Achse zwei Prozessoren beteiligt sind und daß bei üblichen Gebern, z.B. EQN-Geber der Firma Heidenhain, neben einer absoluten Lageerfassung zusätzlich eine hochauflösende Inkremental-Lageerfassung möglich ist.

Dadurch, daß beide Prozessorsysteme sowohl von ihrer Hardware als auch von ihrer Software unterschiedlich ausgebildet sind, genügt das Gesamtsystem höchsten Sicherheitsanforderungen. Diese können beispielsweise noch dadurch unterstützt werden, daß gegenseitige Prozessorüberwachungsmaßnahmen bei Ansprechen ebenfalls ein Störungssignal auslösen. Ferner können Spannungsüberwachungseinrichtungen für mindestens eines der Prozessorsysteme bei Ansprechen der Spannungsstörung ebenfalls ein Störungssignal auslösen.

Die Verarbeitung dieses Störungssignals kann in an sich bekannter Weise dadurch geschehen, daß das Störungssignal auf ein oder besser noch zwei Sicherheitsrelais im Not-Aus-Kreis des Gesamtsystems einwirkt. Typisch für Sicherheitsrelais sind dabei zwangsgeführte Kontakte.

Das Sichern des Systems kann beim Auftreten eines Störungssignals über eine Drehzahlsollwertabschaltung vorzugsweise nach einer Sprung- oder Rampenfunktion über mindestens eines der Prozessorsysteme erfolgen. Es kann allerdings auch ein bahngesteuertes Abschalten über ein gerätegerechtes Geschwindigkeitsprofil erfolgen.

Dadurch, daß die Endlagenüberwachung nicht an mechanisch fixierte Schalter gebunden ist, sondern daß die Wegüberwachung durch Positionsmeldungen erfolgt, ist es möglich, daß bei höheren Geschwindigkeiten und/oder größeren bewegten Massen eine automatische Verkleinerung des vorgegebenen Positionsbereiches erfolgt. Sinngemäß wird damit natürlich auch die Möglichkeit gegeben, bei sinkenden Geschwindigkeiten und/oder bewegten Massen eine automatische Vergrößerung des vorgegebenen Positionsbereiches zu ermöglichen. Außer einer Positionierungsraumvariation kann durchaus auch eine Arbeitsraum- bzw. Schutzraumbegrenzung vorgenommen werden.

Ein Ausführungsbeispiel der Erfindung ist in der Zeichnung dargestellt und wird im folgenden näher erläutert. Dabei zeigen:
FIG 1 ein Blockschaltbild zum Stand der Technik und
FIG 2 ein Blockschaltbild zur erfindungsgemäßen Einrichtung.

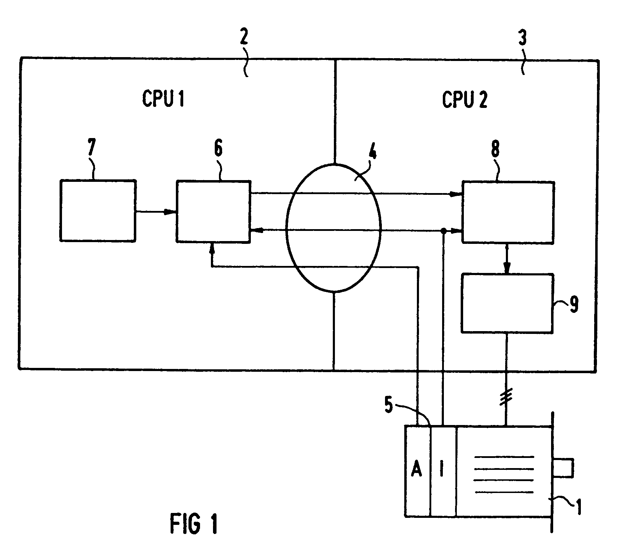

In der Darstellung gemäß FIG 1 ist ein Antrieb 1 gezeigt, der hinsichtlich Lage und Drehzahl von einer numerischen Steuerung 2 und einer Antriebssteuerung 3, die über ein Bussystem 4 miteinander verbunden sind, geregelt wird. Dazu weist der Antrieb 1 einen Geber 5 für die Rotorlage auf, der beispielsweise als EQN-Geber ausgebildet sein kann. Ein derartiger Geber 5 liefert zum einen ein Absolutsignal, wie dies durch den Teil A bezeichnet ist, zum andern ein inkrementelles Signal, wie dies durch den Teil I des Gebers 5 gezeigt ist. Das Absolutsignal meldet einem Lageregler 6 den Absolutwert der jeweiligen Position und der Inkrementalwert der jeweiligen Position. Dabei gibt der Inkrementalwert dem Lageregler 6 die jeweilige Feinposition. Dem Lageregler 6 wird über einen Umsetzer 7, d.h. dem Numerikteil, der das Verfahrprogramm realisiert, dann die jeweilige Soll-Lage zugeführt. Das Ausgangssignal des Lagereglers 6 gelangt dann über den Antriebsbus 4 an einen Drehzahlregler 8, der entsprechend den gewünschten Lageänderungen auf einen Stromregler mit Leistungsteil 9 (im folgenden als Stromregler 9 bezeichnet) einwirkt, welcher wiederum den Antrieb 1 steuert. Der Rückkopplungszweig für den Stromregler 9 ist dabei der Übersichtlichkeit halber nicht gezeigt. Dem Drehzahlregler 8 wird das inkrementelle Signal des Gebers 5 zur Rückmeldung der Istdrehzahl zugeleitet. Die Aufgaben des Umsetzers 7 und des Lagereglers 6, die in der numerischen Steuerung 2 vorgenommen werden, können beispielsweise mit einem ersten Prozessorsystem CPU1 realisiert werden. Die Aufgaben des Drehzahlreglers 8 und des Stromreglers 9 können einem zweiten Prozessorsystem CPU2 zugeordnet sein.

Ausgehend von diesem System mit redundanten Elementen, so ist der Geber 5 sowohl zur Ausgabe von Absolutwerten als auch von Inkrementalwerten geeignet und es sind zwei Prozessorsysteme vorhanden, setzt die Erfindung darauf auf, daß demgemäß die Position des Antriebs 1 so sicher erfaßbar ist, daß auf weitere externe Hardwarendschalter verzichtet werden kann.

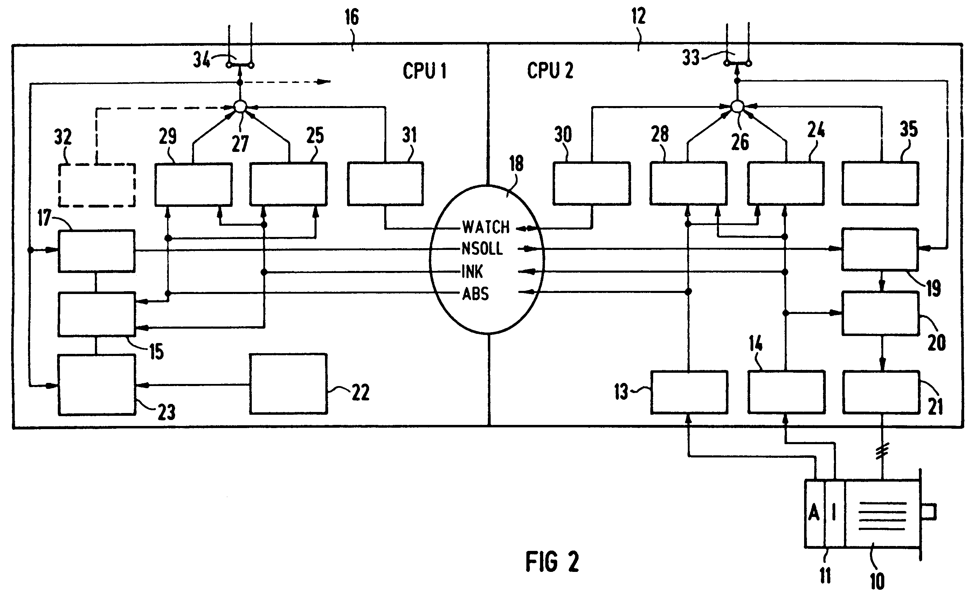

Wie dies erfolgt, ist in der Darstellung gemäß FIG 2 in Form eines Blockschaltbildes dargestellt.

Dort ist ein Antrieb 10 gezeigt, der mit einem Geber 11 versehen ist, der sowohl ein Absolutsignal A als auch ein Inkrementalsignal I ausgibt. In einer Antriebssteuerung 12 wird mittels eines Umsetzers 13 daraus ein Meßwert für die Absolutlage generiert, der im weiteren Signalpfad mit ABS bezeichnet ist. In einem Umsetzer 14 wird aus dem Inkrementalsignal ein inkrementaler Meßwert für die Position des Antriebs gewonnen, das im folgenden als INK bezeichnet ist. Das Signal ABS und das Signal INK, d.h. der Meßwert für die Absolutlage und der Meßwert für die Inkrementallage, werden einem Lageregler 15 der numerischen Steuerung 16 zugeleitet. Der Lageregler 15 generiert daraus fortlaufende Drehzahlsollwerte NSOLL über einen Umsetzer 17, auf dessen Funktion im folgenden noch eingegangen wird, und sendet dieses Signal über einen Antriebsbus 18 an die Antriebssteuerung 12. Dort gelangen sie über einen Umsetzer 19, auf deren Funktion im folgenden noch eingegangen wird, an einen Drehzahlregler 20 und von dort über einen Stromregler mit Leistungsteil 21 (im folgenden als Stromregler 21 bezeichnet) an den Antrieb 10. Der Drehzahlregler 20 kann dabei ebenso wie beim Stand der Technik an den Umsetzer 14 angeschlossen sein. Der Übersichtlichkeit halber ist die Stromrückführung in der Darstellung wie auch bei FIG 1 nicht dargestellt.

Die Vorgaben für den Lageregler 15 erhält dieser aus einem Umsetzer 22, der das Verfahrprogramm liefert, über einen Umsetzer 23, auf dessen Funktion im folgenden noch eingegangen wird. Die durch die bislang geschilderten Elemente dargestellte Struktur entspricht insoweit vollständig derjenigen gemäß FIG 1. Nunmehr wird gemäß der Erfindung jedoch der absolute Lagemeßwert und der inkrementale Lagemeßwert an einen elektronischen Endschalternocken 24 der Antriebssteuerung 12 und einen elektronischen Endschalternocken 25 der numerischen Steuerung 16 geleitet. Der elektronische Endschalternocken 24 bzw. 25 ist dabei so ausgebildet, daß in ihm ein tolerierbares Feld für die Position des Antriebes elektronisch gespeichert ist. Dieses Feld wird mit dem Absolutwert aus dem Umsetzer 13 und dem durch Aufaddieren aus dem Inkrementalwert des Umsetzers 14 gewonnenen weiteren Absolutwert verglichen. Sofern der zulässige Bereich überschritten wird, gibt der elektronische Endschalternocken 24 bzw. 25 ein Störungssignal an ein Verknüpfungsglied 26 bzw. 27.

Um die Sicherheit der Gesamtanordnung noch weiter zu erhöhen, ist ferner sowohl in der Antriebssteuerung 12 als auch in der numerischen Steuerung 16 jeweils eine Geberüberwachung 28 bzw. 29 vorhanden, die gemäß geberspezifische Randbedingungen diesen auf ordnungsgemäße Funktion überwacht. Sofern die Geberüberwachung 28 bzw. 29 ein Fehlverhalten des Gebers 11 erkennt, z.B. Differenz zwischen Absolutposition und aufaddierten Inkrementalwegen, wird ein diesbezügliches Ausgangssignal von der Geberüberwachung 28 bzw. 29 an das Verknüpfungsglied 26 bzw. 27 gegeben, damit auch in diesem Fall ein Störungssignal vorliegt.

Ferner kann eine gegenseitige Prozessorüberwachung mit Hilfe von Prozessorüberwachungsschaltungen 30 und 31 in der Antriebssteuerung 12 und der numerischen Steuerung 16 vorgesehen sein. Deren jeweiliger Signalfluß kann dann über eine Watchdogleitung bidirektional geschehen. Das Signal ist in der Darstellung als WATCH bezeichnet. Derartige Prozessorüberwachungsschaltungen sind in sicheren Schaltungen z.B. bei der Eisenbahnsignaltechnik, seit langem geläufig. Wenn jeweils eine der Prozessorüberwachungsschaltungen 30 bzw. 31 eine Störung eines der Prozessoren CPU1, CPU2 erkennt, gelangt ebenfalls ein entsprechendes Störungssignal an das Verknüpfungsglied 26 bzw. 27. Der Vollständigkeit halber ist gestrichelt angedeutet, daß auch eine Spannungsüberwachung 32 bzw. 35 vorgesehen sein kann, die bei Abweichen von vorgegebenen Sollspannungen ebenfalls ein Störungssignal, in diesem Fall auf das Verknüpfungsglied 27 bzw. 26 auslöst.

Wenn mindestens ein Störungssignal im Verknüpfungsglied 26 bzw. im Verknüpfungsglied 27 vorliegt, kann jeweils ein diesbezügliches Signal zum Betätigen eines Relais 33 mit zwangsgeführten Kontakten im Not-Aus-Kreis seitens der Antriebssteuerung 12 bzw. das Betätigen eines Relais 34 mit zwangsgeführten Kontakten im Not-Aus-Kreis über die numerische Steuerung 16 ausgelöst werden. Damit ist eine sehr hohe Betriebssicherheit für das System bereits erreicht. Störungssignale, die über das Verknüpfungsglied 26 bzw. 27 ausgegeben werden, können auch auf die Umsetzer 17 oder 19 geleitet werden, wodurch die Solldrehzahl NSOLL, die ansonsten vom Lageregler 15 abgegeben wird, in Form einer Sprung- oder Rampenfunktion zurückgenommen wird.

In entsprechender Weise kann das Vorliegen eines Störungssignals am Verknüpfungsglied 27 über dessen Ausgang auch auf den Pfad zwischen Umsetzer 22 und Lageregler 15 einwirken, in dem nämlich dort ein bahngesteuertes Abschalten über maschinengerechte Geschwindigkeitsprofil im Umsetzer 23 ausgelöst wird.

In der Darstellung ist ferner durch einen punktierten Signalverlauf angedeutet, daß das Vorliegen von Störungssignalen vom Ausgang des Verknüpfungsgliedes 27 durchaus auch an die Anpaßsteuerung, die sogenannte PLC, durchgeschaltet werden kann.

Es ist ersichtlich, daß die Position des Antriebs 10 durchgängig zweikanalig erfaßt und ausgewertet wird. Bei Überschreiten von Endlagenwerten oder bei Abweichungen zwischen den beiden Kanälen wird neben einer schnellen internen Reaktion, z. B. über Drehzahlsollwert "0", auch der Not-Aus-Kreis über zwangsgeführte Kontakte aufgetrennt.

Dazu besteht das am Antrieb 10 fest installierte Gebersystem 10 aus zwei unabhängigen Komponenten, nämlich dem Multiturn-Meßsystem für die Absolutlage, und dem inkrementalen Meßsystem für Rotorposition, Drehzahl und Lageteilistwert. Die Meßwerte werden über getrennte Kanäle übertragen und auch mit getrennter Hardware aufbereitet. Durch übliche technische Maßnahmen werden alle hardwarenahen Fehler, z.B. Kabelbruch und ähnliches, erkannt. Beide Meßwerte für die Lage stehen den beiden Prozessorsystemen CPU1 und CPU2, d.h. dem Prozessorsystem des Numerikteils und des Antriebsteils, über einen Antriebsbus 18 zur Verfügung. Somit können beide zugeordneten Prozessorsysteme CPU1 und CPU2 den jeweiligen absoluten Lageistwert hinsichtlich der Endlagenüberschreitung überwachen. Dabei wird der absolute Lageistwert mit dem aufaddierten Lageteilistwert verglichen und bei Abweichung ein Fehler erkannt. Die Software beider Prozessorsysteme ist unabhängig voneinander implementiert. Dabei kann ein Prozessor, beispielsweise der dem Steuerungsteil zugeordnete Prozessor CPU1, als Standardprozessor ausgebildet sein, während der zweite Prozessor, z.B. der dem Antriebssystem zugeordnete Prozessor CPU2, als digitaler Signalprozessor ausgebildet ist. Beide Prozessorsysteme CPU1 und CPU2 überwachen sich gegenseitig.

Die Geberüberwachung kann beispielsweise noch die Eigenschaft aufweisen, daß zyklisch und auf Anforderung der absolute Lageistwert mit dem aufaddierten inkrementellen Lageistwert verglichen wird. Ein zusätzlicher Vorteil der Erfindung ist darin zu sehen, daß die nunmehr elektronisch realisierten Endschalter bzw. Nocken in Abhängigkeit von der Fahrgeschwindigkeit und gegebenenfalls auch in Abhängigkeit von den bewegten Massen verschoben werden können. Damit kann das Verhältnis von tatsächlich nutzbarem Verfahrweg zu gegebener mechanischer Verfahrweglänge verbessert werden, ohne die Sicherheit im Betrieb zu beeinträchtigen. Ein Auffahren auf elastische Puffer, wie dies beim Stand der Technik möglich ist, kann sicher vermieden werden.

Sind an einer Bewegungsachse mehrere Antriebe beteiligt, z.B. bei Gantryachsen, so muß, um ein Verspannen zu vermeiden, in allen Betriebsbedingungen eine gemeinsame Regelung der Antriebe gewährleistet sein. Bei den mechanischen Hardware-Endschaltern, wie sie zur Zeit noch weitgehend verbreitet sind, ist dies jedoch nicht möglich. Im Falle der elektronischen Nocken können jedoch alle beteiligten Achsen entsprechend den mechanischen Abhängigkeiten auf Null geregelt werden. Gleichlaufregler oder elektronische Getriebestrukturen sowie sonstige Achsverkopplungen bleiben hierbei aktiv, so daß die Maschine bzw. das Werkstück nicht beschädigt wird. Dem obengesagten ist implizit auch zu entnehmen, daß neben den sicherheitsrelevanten Nocken auch anwenderspezifische Nocken, z.B. für Kollisionsüberwachungen, realisiert werden können, so daß der Maschinenbauer ganz prinzipiell auf Hardwarenocken mit all ihren Nachteilen, z.B. Installationsaufwand, Verkleben im Betrieb usw., verzichten kann.

Um etwaige Fehler bezuglich des in den elektrischen Endschalternocken 24 und 25 abgelegten Toleranzfeldes, beispielsweise durch Hardwareausfällen, sicher erkennen zu können, ist es möglich, das Toleranzfeld zusätzlich noch ein weiteres Mal in einem zusätzlichen Speicher zu speichern und alle gespeicherten Ergebnisse zyklisch untereinander zu vergleichen. Dieser zusätzliche Speicher kann dabei vorteilhafterweise räumlich mit dem Geber 11 vereinigt sein. Der Signalpfad für den Vergleich kann dabei entweder getrennt zwischen den Endschalternocken 24 und 25 und dem weiteren Speicher gelegt sein oder die Signale können bei gebernahem Speicher auch über die bestehenden Pfade geführt werden. Eine beim Vergleichen der Werte erfaßte Abweichung löst dann selbstverständlich ein Störungssignal aus.

Das Konzept der Erfindung kann nicht nur bei Werkzeugmaschinen und Robotern, sondern durchaus auch bei anderen Maschinen mit Lagepositionierung eingesetzt werden.

## Patentansprüche

1. Einrichtung zur Steuerung mindestens eines Antriebs einer Werkzeugmaschine oder eines Roboters, wobei am Antrieb zwei unterschiedliche Positionserfassungseinrichtungen angreifen und wobei die Steuerungseinrichtung zwei Prozessorsysteme aufweist, von denen das eine vorzugsweise die Verfahrprogrammbearbeitung und die Lageregelung übernimmt und das andere Drehzahl und Stromregelungsaufgaben wahrnimmt, **dadurch gekennzeichnet,** daß aus dem Ausgangssignal jeder der zwei Positionserfassungseinrichtungen (11A,11I) die Antriebsposition gesondert ermittelt wird, und daß in jedem der beiden Prozessorsysteme (CPU1,CPU2) die gesondert ermittelten Antriebspositionen der zwei Positionserfassungseinrichtungen unabhängig auf Gleichheit und das Einhalten eines vorgebbaren Positionsbereiches überwacht werden und daß bei detektierter Ungleichheit jeweils ein Störungssignal ausgelöst wird.

2. Einrichtung nach Anspruch 1, **dadurch gekennzeichnet,** daß beide Prozessorsysteme (CPU1, CPU2) sowohl von ihrer Hardware als auch von ihrer Software her unterschiedlich ausgebildet sind.

3. Einrichtung nach einem der vorstehenden Ansprüche, **dadurch gekennzeichnet,** daß gegenseitige Prozessorüberwachungsmaßnahmen (30,31) bei Ansprechen ebenfalls ein Störungssignal auslösen.

4. Einrichtung nach einem der vorstehenden Ansprüche, **dadurch gekennzeichnet,** daß Spannungsüberwachungseinrichtungen (32,35) für mindesten eines der Prozessorsysteme (CPU1) bei Ansprechen auf Spannungsstörung ebenfalls ein Störungssignal auslösen.

5. Einrichtung nach einem der vorstehenden Ansprüche, **dadurch gekennzeichnet,** daß das Störungssignal auf mindestens ein Sicherheitsrelais (33,34) im Not-Aus-Kreis des Gesamtsystems einwirkt.

6. Einrichtung nach einem der vorstehenden Ansprüche, **dadurch gekennzeichnet,** daß beim Auftreten eines Störungssignals eine Drehzahlsollwertabschaltung vorzugsweise nach einer Sprung- oder Rampenfunktion in mindestens einem der Prozessorsysteme erfolgt.

7. Einrichtung nach einem der vorstehenden Ansprüche, **dadurch gekennzeichnet,** daß bei Auftreten eines Störungssignals ein bahngesteuertes Abschalten über ein gerätegerechtes Geschwindigkeitsprofil erfolgt.

8. Einrichtung nach einem der vorstehenden Ansprüche, **dadurch gekennzeichnet,** daß bei höheren Geschwindigkeiten und/oder größeren bewegten Massen eine automatische Verkleinerung des vorgegebenen Positionsbereiches erfolgt.

## Claims

1. Device for the control of at least one drive of a machine tool or a robot, wherein two different position-detecting devices act at the drive and wherein the control device has two processor systems, of which the one preferably takes on the traversing-program processing and the position control and the other looks after rotational-speed and current-control tasks, characterised in that the drive position is separately ascertained from the output signal of each of the two position-detecting devices (11A, 11I), and in that in each of the two processor systems (CPU1, CPU2) the separately ascertained drive positions of the two position-detecting devices are monitored independently for equality and the observance of a predeterminable positional range, and in that if inequality is detected a respective disturbance signal is triggered.

2. Device according to claim 1, characterised in that both processor systems (CPU1, CPU2) are formed differently both in terms of their hardware and in terms of their software.

3. Device according to one of the preceding claims, characterized in that reciprocal processormonitoring arrangements (30, 31) when actuated also trigger a disturbance signal.

4. Device according to one of the preceding claims, characterised in that voltage-monitoring devices (32, 35) for at least one of the processor systems (CPU1) when actuated in response to voltage disturbance also trigger a disturbance signal.

5. Device according to one of the preceding claims, characterised in that the disturbance signal acts on at least one safety relay (33, 34) in the emergency stop circuit of the whole system.

6. Device according to one of the preceding claims, characterised in that when a disturbance signal occurs, a rotational-speed setpoint value cut-off is effected preferably in accordance with a jump or ramp function in at least one of the processor systems.

7. Device according to one of the preceding claims, characterised in that when a disturbance signal occurs, a path-controlled cut-off is effected by way of an apparatus-related velocity profile.

8. Device according to one of the preceding claims, characterized in that in the case of comparatively high velocities and/or comparatively large moving masses an automatic reduction in the predetermined positional range is effected.

## Revendications

1. Dispositif pour commander au moins un dispositif d'entraînement d'une machine-outil ou d'un robot, deux dispositifs de détection de position différents agissant sur le dispositif d'entraînement et le dispositif de commande présentant deux systèmes de processeur dont l'un assure de préférence le traitement du programme de déplacement et le réglage de position et l'autre est chargé des tâches concernant la vitesse de rotation et la régulation du courant, caractérisé en ce qu'à partir du signal de sortie de chacun des deux dispositifs de détection de position (11A, 11I), on détermine séparément la position du dispositif d'entraînement, et que dans chacun des deux systèmes de processeur (CPU1, CPU2), on contrôle indépendamment les positions du dispositif d'entraînement déterminées séparément pour déterminer si elles sont identiques et respectent une zone de positionnement pouvant être prédéterminée et que l'on délivre un signal de perturbation si l'on détecte une différence.

2. Dispositif selon la revendication 1, caractérisé en ce que les deux systèmes de processeur (CPU1, CPU2) sont réalisés différemment tant du point de vue du matériel que du logiciel.

3. Dispositif selon l'une des revendications précédentes, caractérisé en ce que des mesures de surveillance mutuelle de processeur (30, 31) déclenchent également un signal de perturbation en cas de réaction.

4. Dispositif selon l'une des revendications précédentes, caractérisé en ce que des dispositifs de surveillance de tension (32,35) pour au moins un (CPU1) des systèmes de processeur déclenchent également un signal de perturbation en cas de réaction à une perturbation de tension.

5. Dispositif selon l'une des revendications précédentes, caractérisé en ce que le signal de perturbation agit sur au moins un relais de sécurité (33, 34) dans le circuit d'arrêt d'urgence de l'ensemble du système.

6. Dispositif selon l'une des revendications précédentes, caractérisé en ce que lors de l'apparition d'un signal de perturbation, on effectue une coupure de la valeur de consigne de vitesse de rotation, de préférence suivant une fonction saut ou une fonction linéaire, dans au moins un des systèmes de processeur.

7. Dispositif selon l'une des revendications précédentes, caractérisé en ce que lors de l'apparition d'un signal de perturbation, on effectue une coupure commandée en continu par l'intermédiaire d'un profil de vitesse conforme à l'appareil.

8. Dispositif selon l'une des revendications précédentes, caractérisé en ce qu'une réduction automatique de la zone de positionnement prédéterminée se produit en présence de vitesses plus élevées et/ou de masses déplacées plus grandes.
